(19) Europäisches Patentamt
European Patent Office
Office européen des brevets

(11) **EP 1 607 307 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(51) Int Cl.:
*B62D 6/00* *(2006.01)*     *B62D 137/00* *(2006.01)*

(21) Anmeldenummer: **05103860.2**

(22) Anmeldetag: **10.05.2005**

(54) **Verfahren zum Betrieb eines Lenksystems**

Method for operating a steering system

Procédé pour la commande d'un système de direction

(84) Benannte Vertragsstaaten:
**DE FR GB IT SE**

(30) Priorität: **15.06.2004 DE 102004028829**

(43) Veröffentlichungstag der Anmeldung:
**21.12.2005 Patentblatt 2005/51**

(73) Patentinhaber: **ZF Lenksysteme GmbH 73527 Schwäbisch Gmünd (DE)**

(72) Erfinder:
• **Reinelt, Wolfgang 70374 Stuttgart (DE)**
• **Klier, Willy 71404 Korb (DE)**
• **Schuster, Wolfgang 73453 Abtsgmünd (DE)**
• **Großheim, Reinhard 73457 Essingen (DE)**

(56) Entgegenhaltungen:
**DE-A1- 10 247 975**

EP 1 607 307 B1

**Beschreibung**

Die Erfindung betrifft ein Verfahren zum Betrieb eines Lenksystems gemäß dem Oberbegriff von Anspruch 1. Die Erfindung betrifft auch ein Computerprogramm mit Programmcodemitteln, um ein derartiges Verfahren durchzuführen.

Ein gattungsgemäßes Verfahren ist aus der DE 197 51 125 A1 bekannt. Dabei werden die vom Fahrer durch ein Lenkrad aufgebrachten Lenkbewegungen, der durch einen Sensor erfasste Lenkradwinkel, mittels eines Überlagerungsgetriebes mit den Bewegungen des Stellantriebes, dem Motorwinkel, überlagert. Die so entstandene überlagerte Bewegung wird über das Lenkgetriebe bzw. das Lenkgestänge an die lenkbar ausgelegten Räder zur Einstellung des Lenkwinkels weitergeleitet. Hierbei ist der Stellantrieb als Elektromotor ausgelegt. Das Funktionsprinzip bzw. die Nutzanwendungen eines solchen Servolenksystems bestehen insbesondere darin, dass die Lenkung durch die Übersetzung des Überlagerungsgetriebes indirekt ausgeführt werden kann und damit geringe Lenkradmomente erreicht werden können. Dadurch bedingte, sehr große Lenkradwinkel werden vermieden, indem geeignete Motorwinkel überlagert werden, so dass mit Lenkradwinkeln üblicher Größe erforderliche Ausgangswinkel eingestellt werden können. Der zur Lenkunterstützung erforderliche Motorwinkel bzw. sein Sollwert wird aus dem Lenkradwinkel bestimmt. Darüber hinaus kann der Motorwinkel auch abhängig sein von Signalen, welche die durch Sensoren und/oder andere Fahrzeugsysteme, wie z. B. ein elektronisches Stabilitätsprogramm (ESP) erfassten Fahrzeugbewegungen repräsentieren. Dies erfolgt durch ein Steuergerät, auf welchem die für die Bestimmung der erforderlichen Motorwinkel bzw. die für die Steuerung der Nutzanwendungen erforderlichen Programme ausgeführt werden.

Ein solches Verfahren ist ebenfalls aus der DE 102 47 975 A1 bekannt.

Aufgrund der Sicherheitsanforderungen an ein derartiges Lenksystem ist ein Sicherheitskonzept mit Sicherheits- und Diagnosefunktionen, insbesondere um zufällige Fehler in der Sensorik, dem Steuergerät selbst oder der Aktuatorik zu entdecken und geeignet zu reagieren, d. h. beispielsweise die Nutzfunktionen, insbesondere die variable Lenkübersetzung geeignet zu schalten und/oder entsprechende Ersatzmodi zu starten, unerlässlich. Die Eingangssignale des Steuergeräts werden auf Plausibilität geprüft. Beispielsweise wäre es nachteilig, ein verfälschtes Geschwindigkeitssignal zu akzeptieren, da die variable Lenkübersetzung geschwindigkeitsabhängig variiert wird.

Die variable Lenkübersetzung des Lenksystems berechnet die gewünschte Motorwinkelposition aufgrund von Fahrzeuggeschwindigkeit, Ritzelwinkel und Lenkradwinkel.

Bei Wegfall der ersten beiden Signale kann die variable Lenkübersetzung in einen sicheren, aber weiterhin aktiven Ersatzzustand überführt werden. Bei Wegfall des Lenkradwinkelsignals entfällt jedoch auch die Information über den Fahrerlenkwunsch. Für diese Situation ist kein sinnvoller Ersatzmodus möglich, die variable Lenkübersetzung muss abgeschaltet werden. Da zuvor jedoch durch das Überlagerungsgetriebe bzw. den Stellantrieb ein Motorwinkel überlagert wurde, entsteht nun ein sogenannter Lenkradschiefstand, d.h. bei Geradeausstellung des Lenkrades stehen die lenkbaren Räder eventuell schief.

Der vorliegenden Erfindung liegt daher die Aufgabe zugrunde, ein Verfahren zum Betrieb eines Lenksystems und ein Computerprogramm zu dessen Durchführung der eingangs erwähnten Art zu schaffen, welches beim Schalten bzw. Abschalten von Nutzfunktionen einen Lenkradschiefstand vermeidet.

Erfindungsgemäß wird diese Aufgabe durch den kennzeichnenden Teil von Anspruch 1 gelöst. Die Aufgabe wird hinsichtlich des Computerprogramms durch Anspruch 7 gelöst.

Die Eingangssignale des Steuergeräts werden mittels geeigneter Sicherheitsfunktionen laufend überwacht, und aufgrund dieser Überwachung die Nutzfunktionen (z.B. die variable Lenkübersetzung) entsprechend geschaltet bzw. abgeschaltet. Durch ein kontrolliertes Zurückdrehen des Stellantriebs wird beim Schalten in eine Rückfallebene der Nutzfunktionen (kinematische Lenkassistenzfunktionen) ein eventuell auftretender Lenkradschiefstand zuverlässig und für den Fahrer nahezu unbemerkt entfernt. Dadurch wird der Komfort des Lenksystems maßgeblich erhöht.

Vorteilhaft ist es, wenn durch die Nutzfunktionen gebildete Lenkanteile zur Erzeugung des Steuersignals überlagert werden, wobei die Lenkanteile zum kontrollierten Zurückdrehen des Stellantriebs entsprechend begrenzt werden.

Dadurch werden die einzelnen Lenkanteile bzw. Sollmotorwinkelvorgaben aller Nutzfunktionen in ein Steuersignal überlagert bzw. addiert. Dies kann im Wesentlichen relativ anhand vorgegebener Prioritäten geschehen. Z.B. kann die variable Lenkübersetzung als Nutzfunktion Vorrang haben und absolut in die Berechnung einfließen, während die Lenkanteile der übrigen Nutzfunktionen nur relativ dazu berücksichtigt werden. In einfacher Weise werden die Lenkanteile der Nutzfunktionen zum kontrollierten Zurückdrehen des Stellantriebs beim Abschalten oder Schalten eines Ersatzmodus wenigstens einer Nutzfunktion begrenzt. Dies kann sowohl getrennt für jeden Lenkanteil als auch für das bereits errechnete Steuersignal insgesamt oder auch kombiniert erfolgen.

Das Abschalten oder das Schalten eines Ersatzmodus wenigstens einer Nutzfunktion kann aufgrund fehlerhafter Eingangssignale des Steuergeräts erfolgen.

Als Nutzfunktionen kommen eine variable Lenkübersetzung, eine Vorhaltelenkung oder eine Fahrdynamikstabilisierung in Betracht. Des weiteren sind selbstverständlich auch andere Nutzfunktionen denkbar.

In einer verfahrensmäßigen Ausgestaltung der Erfindung kann ferner vorgesehen sein, dass das kontrollierte Zurückdrehen des Stellantriebs langsam mittels einer niedrigen Winkelgeschwindigkeit erfolgt und der Verlauf des Steuersignals für den Motorwinkel des Stellantriebs dabei stetig ist.

Dadurch bemerkt der Fahrer das Zurückdrehen des Stellantriebs kaum. Eine Bewegung des Stellantriebs verursacht ein Reaktionsmoment am Lenkrad, dies sollte sehr gering gehalten werden. Ein gleichbleibend hoher Fahrtkomfort wird somit sichergestellt.

Vorteile bezüglich des Computerprogramms ergeben sich analog und anhand der Beschreibung.

Nachfolgend ist anhand der Zeichnung ein Ausführungsbeispiel der Erfindung prinzipmäßig beschrieben.

Es zeigen:

Fig. 1 und 2      ein Schema des Lenksystems nach dem Stand der Technik, von dem die Erfindung im Ausführungsbeispiel ausgeht;

Fig. 3      ein Diagramm eines Verlaufs eines Lenkanteils einer variablen Lenkübersetzung; und

Fig. 4      ein Schema zur Ermittlung eines gewünschten Motorwinkels innerhalb eines erfindungsgemäßen Verfahrens zum Betrieb eines Lenksystems.

Im folgenden soll die Erfindung anhand eines Ausführungsbeispiels dargestellt werden. Dabei wird beispielhaft von einer eingangs erwähnten Überlagerungslenkung ausgegangen.

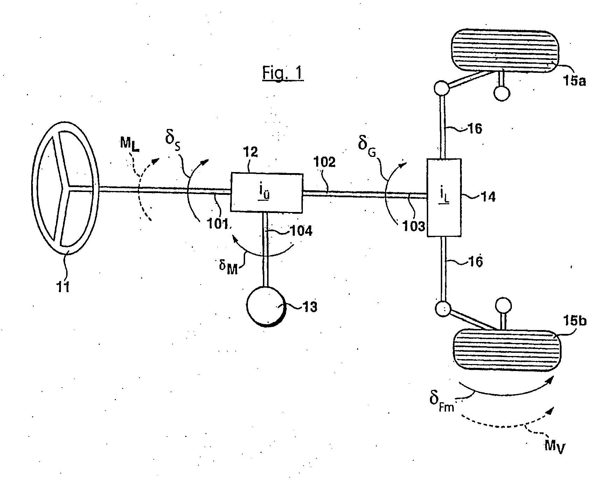

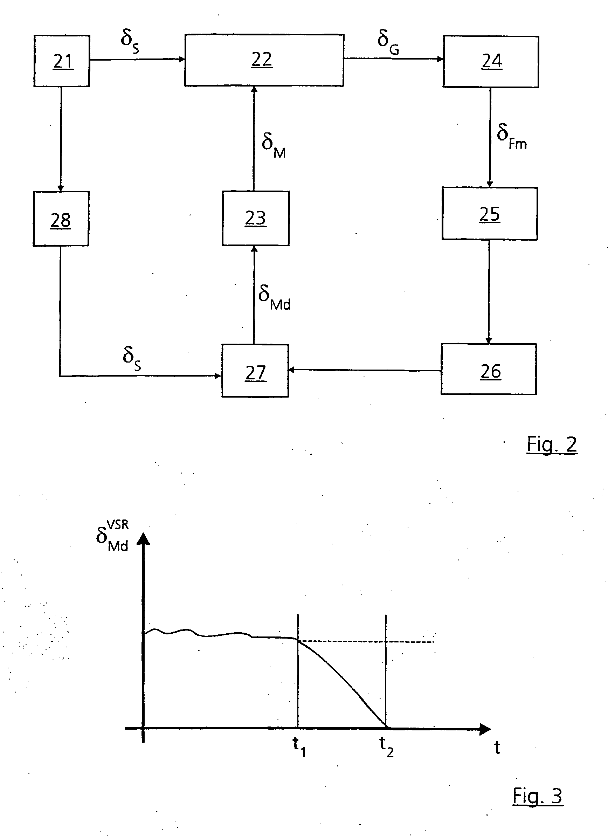

Die Fig. 1 bzw. Fig. 2 zeigt mit den Bezugszeichen 11 bzw. 21 ein von dem Fahrer des Fahrzeugs betätigbares Lenkrad. Durch die Betätigung des Lenkrades 11 bzw. 21 wird einem Überlagerungsgetriebe 12 bzw. 22 über eine Verbindung 101 ein Lenkradwinkel $\delta_S$ zugeführt. Gleichzeitig wird dem Überlagerungsgetriebe 12 bzw. 22 über eine Verbindung 104 ein Motorwinkel $\delta_M$ eines Stellantriebes 13 bzw. 23 zugeleitet, wobei der Stellantrieb als Elektromotor ausgebildet sein kann. Ausgangsseitig des Überlagerungsgetriebes 12 bzw. 22 wird die überlagerte Bewegung bzw. der Ritzelwinkel $\delta_G$ über eine Verbindung 102, 103 einem Lenkgetriebe 14 bzw. 24 zugeführt, das wiederum über ein Lenkgestänge 16 entsprechend der überlagerten Bewegung bzw. dem Gesamtwinkel $\delta_G$ lenkbare Räder 15a und 15b mit einem Lenkwinkel $\delta_{Fm}$ beaufschlagt. Die mechanische Übersetzung des Überlagerungsgetriebes 12 bzw. 22 für $\delta_M$ = 0 ist mit $i_ü$ = $\delta_G/\delta_S$ und die mechanische Übersetzung des Lenkgetriebes 14 bzw. 24 mit dem Bezugszeichen $i_L$ bezeichnet.

Auf die lenkbar ausgelegten Räder 15a und 15b wirkt ein von der Straße beeinflusstes Reaktionsmoment $M_V$. In der Fig. 2 sind weiterhin Sensoren 26 und 28 zu sehen, wobei der Sensor 28 den Lenkradwinkel $\delta_S$ detektiert und einem Steuergerät 27 zuführt, während mit dem Bezugszeichen 26 Sensoren gekennzeichnet sind, die die Bewegungen des Fahrzeugs (beispielsweise Gierbewegungen, Querbeschleunigung, Raddrehzahlen, Fahrzeuggeschwindigkeit $v_X$, usw.) detektieren und entsprechende Signale dem Steuergerät 27 zuführen. Das Steuergerät 27 ermittelt, abhängig vom erfassten Lenkradwinkel $\delta_S$ und ggf. abhängig von den Fahrzeugbewegungen eine Stellgröße $\delta_{Md}$ zur Ansteuerung des Stellantriebs 13 bzw. 23 zur Realisierung von Nutzanwendungen (z. B. eine variable Lenkübersetzung VSR). Die Signale der Sensoren 26 können auch einem CAN-Bussystem des Fahrzeugs entnommen werden.

Zwischen den in den Fig. 1 bzw. 2 dargestellten Winkeln und Drehmomenten gelten die bekannten Zusammenhänge ($i_L$() ist eine nichtlineare Funktion):

$$i_L(\delta_{Fm}) \; = \; [\delta_S/i_ü \; + \; \delta_M] \; (1)$$

und

$$M_L \; = \; M_V/(i_L * i_ü) \qquad (2)$$

Eine Servolenkfunktion wird durch das in den Fig. 1 und 2 gezeigte Lenksystem dadurch erreicht, dass durch eine große Gesamtübersetzung ($i_L * i_ü$), d. h. durch eine sehr indirekte Lenkung, das Lenkradmoment $M_L$ reduziert wird. Dem Lenkradwinkel $\delta_S$ wird ein Motorwinkel $\delta_M$ nach der oben genannten Gleichung 1 überlagert, so dass ein gewünschter Vorderradwinkel $\delta_{Fm}$ mit einem nicht zu großen Lenkradwinkel $\delta_S$ eingestellt werden kann. Dabei können durch eine geeignete Ansteuerung des Motors Zusammenhänge zwischen dem Lenkradwinkel $\delta_S$ und dem Lenkwinkel $\delta_{Fm}$ realisiert werden, die auch vom Fahrzustand, beispielsweise der Fahrzeuggeschwindigkeit $v_X$ oder dem Lenkradwinkel $\delta_S$, abhängen können.

Nach der o. g. Gleichung 2 ist das Lenkradmoment $M_L$ nur von dem Reaktionsmoment $M_V$ an den lenkbaren Rädern abhängig und somit durch den Motoreingriff nicht beeinflussbar. Hierdurch ergibt sich das schon erwähnte Problem, dass durch die Wahl eines konstanten Übersetzungsverhältnisses des Lenkgetriebes kein für alle Fahrzustände akzeptables Lenkradmoment bzw. Lenkgefühl erreicht werden kann. Insbesondere darf das Lenkradmoment $M_L$ bei großen Lenkwinkeln im Stand nicht zu groß werden, während es bei Fahrten mit hoher Geschwindigkeit nicht zu klein werden darf.

Aufgrund der dadurch bedingten Sicherheitsanforderungen an das Lenksystem, ist ein Sicherheitskonzept mit Sicherheits- und Diagnosefunktionen, insbesondere, um zufällige Fehler in den Sensoren 26, 28, dem Steuergerät 27 selbst oder der Aktuatorik zu entdecken und geeignet zu reagieren, d. h. beispielsweise die Nutzfunktionen, insbesondere die variable Lenkübersetzung VSR geeignet zu schalten und/oder entsprechende Ersatzmodi zu starten, unerlässlich. Die Eingangssignale des Steuergeräts 27, insbesondere $\delta_S$ und die fahrzeugspezifischen Daten der Sensoren 26, werden auf Plausibilität geprüft. Beispielsweise wäre es nachteilig, ein falsches Geschwindigkeitssignal $v_X$ des Fahrzeugs zu akzeptieren, da die variable Lenkübersetzung VSR geschwindigkeitsabhängig variiert wird.

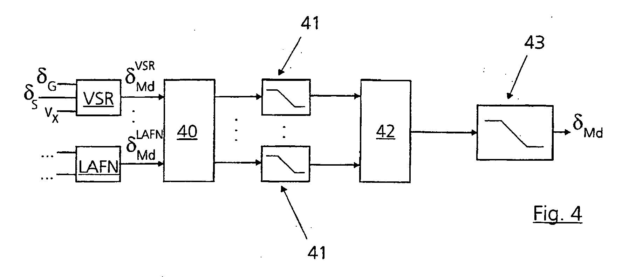

Die variable Lenkübersetzung des Lenksystems berechnet eine gewünschte Motorwinkelvorgabe bzw. einen Lenkanteil $\delta_{Md}^{VSR}$ aufgrund von Fahrzeuggeschwindigkeit $v_X$, Ritzelwinkel $\delta_G$ und Lenkradwinkel $\delta_S$ (siehe auch Fig. 4). Bei Wegfall der ersten beiden Signale kann die variable Lenkübersetzung VSR in einen sicheren aber weiterhin aktiven Ersatzzustand überführt werden. Bei Wegfall des Eingangssignals des Lenkradwinkels $\delta_S$ entfällt jedoch auch die Information über den Fahrerlenkwunsch. Für diese Situation ist kein sinnvoller Ersatzmodus möglich, die variable Lenkübersetzung VSR muss abgeschaltet werden. Da zuvor jedoch durch das Überlagerungsgetriebe 12 bzw. 22 bzw. den Stellantrieb 13 bzw. 23 ein Motorwinkel $\delta_M$ überlagert wurde, entsteht nun ein sogenannter Lenkradschiefstand, d. h. bei Geradeausstellung des Lenkrades 11 bzw. 21 stehen die lenkbaren Räder (15a,15b) eventuell schief.

Erfindungsgemäß wird bei einer notwendigen Korrektur des Lenkradschiefstands, wie in Fig. 3 anhand eines Verlaufs des Lenkanteils $\delta_{Md}^{VSR}$ der Nutzfunktion variable Lenkübersetzung VSR dargestellt, der Lenkanteil $\delta_{Md}^{VSR}$ kontrolliert zurückgestellt. Auf der vertikalen Achse ist dazu der Lenkanteil $\delta_{Md}^{VSR}$, bzw. der Überlagerungswinkelanteil aufgetragen, während die horizontale Achse die Zeit t darstellt. Bis zum Zeitpunkt $t_1$ verläuft der Lenkanteil $\delta_{Md}^{VSR}$ normal nach den Vorgaben der variablen Lenkübersetzung VSR. Zum Zeitpunkt $t_1$ entfällt das Eingangssignal Lenkradwinkel $\delta_S$ der Nutzfunktion variable Lenkübersetzung VSR, wonach der Lenkanteil $\delta_{Md}^{VSR}$ langsam, d.h. mit niedriger Winkelgeschwindigkeit und stetig zurückgefahren wird, bis zu einem Zeitpunkt $t_2$ der Lenkanteil $\delta_{Md}^{VSR}$ gleich null bzw. der Lenkradschiefstand beseitigt ist. Des weiteren ist ein denkbarer konstanter Verlauf des Lenkanteils $\delta_{Md}^{VSR}$ gestrichelt angedeutet. Dieser könnte bei Ausfall der Eingangssignale Fahrzeuggeschwindigkeit $v_X$, Ritzelwinkel $\delta_G$ vorgesehen sein.

Fig. 4 zeigt eine prinzipmäßige Ermittlung eines gewünschten Motorwinkels bzw. Steuersignals $\delta_{Md}$ innerhalb eines erfindungsgemäßen Verfahrens zum Betrieb eines Lenksystems. Dabei ermitteln die variable Lenkübersetzung VSR und weitere Nutzfunktionen LAFN parallel laufend zu jedem Abtastschritt, u. a. anhand deren Eingangssignale, Lenkanteile $\delta_{Md}^{VSR}, \ldots, \delta_{Md}^{LAFN}$. Diese Sollvorgaben werden in einer Vorfilterungseinheit 40 gefiltert, danach in Rückstelleinheiten 41 bei Vorliegen eines zu korrigierenden Lenkradschiefstands begrenzt (entsprechend Fig. 3 zwischen $t_1$ und $t_2$) und schließlich in einem Koordinator 42 überlagert bzw. addiert. Diese Überlagerung geschieht im Wesentlichen anhand vorgegebener Prioritäten. Die variable Lenkübersetzung VSR hat als Nutzfunktion Vorrang und geht als absoluter Winkel in die Berechnung ein, während die Lenkanteile der übrigen Nutzfunktionen $\delta_{Md}^{LAFN}$ nur relativ zu dieser (als jeweiliger Differenzbetrag zwischen dem Lenkanteil $\delta_{Md}^{VSR}$ und den Lenkanteilen $\delta_{Md}^{LAFN}$) in die Berechnung einfließen. Anschließend erfolgt eine weitere Begrenzung in einer Einheit 43 welche als Ausgangssignal die gewünschte Motorwinkelvorgabe bzw. das Steuersignal $\delta_{Md}$ an den Stellantrieb 13 bzw. 23 liefert.

Das erfindungsgemäße Verfahren zum Betrieb eines Lenksystems ist vorzugsweise als Computerprogramm auf dem Steuergerät 27 realisiert. Dazu ist das Computerprogramm in einem Speicherelement (nicht dargestellt) des Steuergeräts 27 gespeichert. Durch die Abarbeitung auf einem Mikroprozessor des Steuergeräts 27 wird das erfindungsgemäße Verfahren ausgeführt. Das Computerprogramm kann auf einem computerlesbaren Datenträger (Diskette, Festplatte, CD-ROM, DVD, SD-Karte, etc.) oder einem Internet-Server als Computerprogrammprodukt gespeichert sein und von dort aus in das Speicherelement des Steuergeräts 27 übertragen werden.

Bezugszeichen

11      Lenkrad
12      Überlagerungsgetriebe
13      Stellantrieb
14      Lenkgetriebe
15a     Räder
15b     Räder
16      Lenkgestänge

| | |
|---|---|
| 21 | Lenkrad |
| 22 | Überlagerungsgetriebe |
| 23 | Stellantrieb |
| 24 | Lenkgetriebe |
| 25 | - |
| 26 | Sensoren |
| 27 | Steuergerät |
| 28 | Sensoren |
| | |
| 40 | Vorfilterungseinheit |
| 41 | Rückstelleinheit |
| 42 | Koordinator |
| 43 | Einheit |
| | |
| 101 | Verbindung |
| 102 | Verbindung |
| 103 | Verbindung |
| 104 | Verbindung |
| | |
| $\delta_S$ | Lenkradwinkel |
| $\delta_M$ | Motorwinkel |
| $\delta_{Md}$ | Motorwinkelsollvorgabe bzw. Steuersignal |
| $\delta_G$ | Ritzelwinkel |
| | |
| $\delta_{Fm}$ | Lenkwinkel |
| $V_X$ | Fahrzeuggeschwindigkeit |
| $i_{ü}$ | mech. Übersetzung des Überlagerungsgetriebes |
| $i_L$ | mech. Übersetzung des Lenkgetriebes |
| $M_V$ | Reaktionsmoment |
| $M_L$ | Lenkradmoment |
| $\delta_{Md}^{VSR}$ | Lenkanteil der variablen Lenkübersetzung |
| $\delta_{Md}^{LAFN}$ | übrige Lenkanteile |
| | |
| VSR | variable Lenkübersetzung |
| LAFN | weitere Nutzfunktionen |
| $t_{1,2}$ | Zeitpunkte |

**Patentansprüche**

1. Verfahren zum Betrieb eines Lenksystems für ein Kraftfahrzeug mit wenigstens einem lenkbaren Rad (15), einem Stellantrieb (13;23) und einem Überlagerungsgetriebe (12;22), wobei durch das Überlagerungsgetriebe (12;22) die durch den Fahrer des Fahrzeugs initiierte Lenkbewegung ($\delta_S$) und die durch den Stellantrieb (13;23) initiierte Bewegung ($\delta_M$) zur Erzeugung der Lenkbewegung des lenkbaren Rades ($\delta_{Fm}$) zur Realisierung von Nutzfunktionen in einen Ritzelwinkel ($\delta_G$) überlagert werden, wobei der Stellantrieb (13;23) zur Initiierung der Bewegung ($\delta_M$) durch ein Steuersignal ($\delta_{Md}$) eines Steuergeräts (27) angesteuert wird,

**dadurch gekennzeichnet, dass** ein kontrolliertes Zurückdrehen des Stellantriebs (13;23) bei einem Abschalten oder Schalten eines Ersatzmodus wenigstens einer Nutzfunktion (VSR,LAFN) des Lenksystems durchgeführt wird.

2. Verfahren nach Anspruch 1,
**dadurch gekennzeichnet, dass** durch die Nutzfunktionen (VSR,LAFN) gebildete Lenkanteile ($\delta_{Md}^{VSR}$, $\delta_{Md}^{LAFN}$) zur Erzeugung des Steuersignals ($\delta_{Md}$) überlagert werden, wobei die Lenkanteile ($\delta_{Md}^{VSR}$, $\delta_{Md}^{LAFN}$) zum kontrollierten Zurückdrehen des Stellantriebs (13;23) entsprechend begrenzt werden.

3. Verfahren nach Anspruch 1 oder 2,
**dadurch gekennzeichnet, dass** das Steuergerät (27) den Lenkradwinkel ($\delta_S$), den Ritzelwinkel ($\delta_G$) und weitere fahrzeugspezifische Parameter, insbesondere eine Fahrzeuggeschwindigkeit ($v_X$) als Eingangssignale erhält, wobei das Abschalten oder das Schalten eines Ersatzmodus wenigstens einer Nutzfunktion aufgrund fehlerhafter Eingangssignale ($v_X$, $\delta_G$, $\delta_S$) des Steuergeräts (27) erfolgt.

4. Verfahren nach Anspruch 1, 2 oder 3,
**dadurch gekennzeichnet, dass** als Nutzfunktion eine variable Lenkübersetzung (VSR), eine Vorhaltelenkung oder eine Fahrdynamikstabilisierung eingesetzt wird.

5. Verfahren nach einem der Ansprüche 1 bis 4,
**dadurch gekennzeichnet, dass** das kontrollierte Zurückdrehen des Stellantriebs (13;23) langsam mittels einer niedrigen Winkelgeschwindigkeit erfolgt.

6. Verfahren nach Anspruch 1 bis 5,
**dadurch gekennzeichnet, dass** der Verlauf des Steuersignals ($\delta_{Md}$) für den Motorwinkel ($\delta_M$) des Stellantriebs (13;23) bei dem kontrollierten Zurückdrehen stetig ist.

7. Computerprogramm mit Programmcodemitteln, um ein Verfahren gemäß einem der Ansprüche 1 bis 6 durchzuführen, wenn dass Programm auf einem Computer insbesondere auf dem Steuergerät (27) des Lenksystems ausgeführt wird.

8. Computerprogrammprodukt mit Programmcodemitteln, die auf einem computerlesbaren Datenträger gespeichert sind, um ein Verfahren gemäß einem der Ansprüche 1 bis 6 durchzuführen, wenn dass Programm auf einem Mikroprozessor eines Computers, insbesondere auf dem Steuergerät (27) des Lenksystems, ausgeführt wird.

9. Steuergerät (27) für ein Lenksystem, welches zur Ausführung eines Computerprogramms gemäß Anspruch 7 eingerichtet ist.

## Claims

1. Method for operating a steering system for a motor vehicle with at least one steerable wheel (15), a servo drive (13; 23) and a superposition gear mechanism (12; 22), the steering movement ($\delta_S$) initiated by the driver of the vehicle and the movement ($\delta_M$) initiated by the servo drive (13; 23) for producing the steering movement of the steerable wheel ($\delta_{FM}$) being superimposed for realizing useful functions by the superposition gear mechanism (12; 22) to form a pinion angle ($\delta_G$) the servo drive (13; 23) for initiating the movement ($\delta_M$) being triggered by a control signal ($\delta_{Md}$) of a control device (27), **characterized in that** the servo drive (13; 23) is turned back in a controlled manner when a substitute mode of at least one useful function (VSR, LAFN) of the steering system is deactivated or activated.

2. Method according to Claim 1, **characterized in that** steering portions ($\delta_{Md}^{VSR}$, $\delta_{Md}^{LAFN}$) formed by the useful functions (VSR, LAFN) are superimposed to produce the control signal ($\delta_{Md}$), the steering portions ($\delta_{Md}^{VSR}$, $\delta_{Md}^{LAFN}$) being limited appropriately for controlled turning back of the servo drive (13; 23).

3. Method according to Claim 1 or 2, **characterized in that** the control device (27) receives the steering wheel angle ($\delta_S$), the pinion angle ($\delta_G$) and further vehicle-specific parameters, especially a vehicle speed ($v_x$), as input signals, a substitute mode of at least one useful function being activated or deactivated as a result of defective input signals ($v_x$, $\delta_G$, $\delta_S$) of the control device (27).

4. Method according to Claim 1, 2 or 3, **characterized in that** a variable steering ratio (VSR), a lead steering function or a vehicle dynamics stabilization function is used as useful function.

5. Method according to one of the Claims 1 to 4, **characterized in that** the servo drive (13; 23) is slowly turned back in a controlled fashion using a low angular velocity.

6. Method according to Claims 1 to 5, **characterized in that** the profile of the control signal ($\delta_{Md}$) for the motor angle ($\delta_M$) of the servo drive (13; 23) is steady during the controlled turning back.

7. Computer program with program coding means, in order to carry out a method according to one of Claims 1 to 6, when the program is carried out on a computer, especially on the control device (27) of the steering system.

8. Computer program product with program coding means, which are stored on a computer-readable storage medium, in order to carry out a method according to one of Claims 1 to 6, when the program is carried out on a microprocessor of a computer, especially on the control device (27) of the steering system.

9. Control device (27) for a steering system, which is equipped for carrying out a computer program according to Claim 7.

## Revendications

1. Procédé pour la commande d'un système de pilotage pour un véhicule automobile, avec au moins une roue directionnelle (15), un actionneur (13 ; 23) et une boîte mixte (12 ; 22), le braquage ($\delta_s$) initié par le conducteur du véhicule ainsi que le mouvement ($\delta_M$) initié par l'actionneur (13 ; 23) pour produire le braquage de la roue directionnelle ($\delta_{Fm}$) étant superposés pour donner un angle de pignon ($\delta_G$) par le biais de la boîte mixte (12 ; 22), afin de, pouvoir réaliser les fonctions utilitaires, l'actionneur (13; 23) étant commandé par un signal de commande ($\delta_{Md}$) venant d'un appareil de commande (27) afin d'initier le mouvement ($\delta_M$),
**caractérisé en ce que**
une rotation arrière contrôlée de l'actionneur (13; 23) entraîne l'exécution d'au moins une fonction utilitaire (VSR, LAFN) du système de pilotage lors de la mise en marche ou de l'arrêt du mode assisté.

2. Procédé selon la revendication 1,
**caractérisé en ce que**
les parts de direction ($\delta^{VSR}_{Md}$, $\delta^{LAFN}_{Md}$) réalisées à l'aide des fonctions utilitaires (VSR, LAFN) entraînent la création du signal de commande ($\delta_{Md}$) les parts de direction ($\delta^{VSR}_{Md}$, $\delta^{LAFN}_{Md}$) de la rotation arrière contrôlée de l'actionneur (13; 23) étant limitées de manière correspondante.

3. Procédé selon la revendication 1 ou 2,
**caractérisé en ce que**
l'appareil de commande (27) reçoit des signaux concernant l'angle de braquage ($\delta_s$), l'angle de pignon ($\delta_G$) et d'autres paramètres spécifiques au véhicule, notamment sa vitesse ($v_x$), et la mise en marche ou l'arrêt du mode assisté d'au moins une fonction utilitaire se fait suite à la réception de signaux d'erreur ($v_x$, $\delta_G$, $\delta_s$) depuis l'appareil de commande (27).

**4.** Procédé selon la revendication 1, 2 ou 3, **caractérisé en ce que** la fonction utilitaire est représentée par un rapport de direction variable (VSR), une direction guidée ou une stabilisation de la dynamique de conduite.

**5.** Procédé selon l'une des revendications 1 à 4, **caractérisé en ce que** la rotation arrière contrôlée de l'actionneur (13 ; 23) se fait lentement au moyen d'une faible vitesse angulaire.

**6.** Procédé selon les revendications 1 à 5, **caractérisé en ce que** la transmission du signal de commande ($\delta_{Md}$) pour l'angle de moteur ($\delta_M$) de l'actionneur (13 ; 23) est continue lors d'une rotation arrière contrôlée.

**7.** Programme informatique avec des moyens de codage de programme, permettant d'exécuter le procédé selon l'une des revendications 1 à 6, lorsque le programme est exécuté au moyen d'un ordinateur, notamment au moyen d'un appareil de commande (27) du système de pilotage.

**8.** Programme informatique avec des moyens de codage de programme qui sont enregistrés sur un support de données compatible avec l'ordinateur, servant à exécuter le procédé selon l'une des revendications 1 à 6, lorsque le programme est exécuté sur le microprocesseur d'un ordinateur, notamment sur un appareil de commande (27) du système de pilotage.

**9.** Appareil de commande (27) pour un système de pilotage qui est conçu pour l'exécution d'un programme informatique selon la revendication 7.

EP 1 607 307 B1

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19751125 A1

- DE 10247975 A1